# EUROPEAN PATENT SPECIFICATION

(11) **EP 1 049 615 B1**
(45) Date of publication and mention of the grant of the patent: **07.07.2004**
(21) Application number: 99905403.4
(22) Date of filing: 27.01.1999
(51) Int. Cl.: B61F 5/00, B60G 21/10, G01P 15/00, G05D 1/08

(54) **A DEVICE FOR THE ESTIMATION OF THE LATERAL ACCELERATION OF A RAILWAY VEHICLE**
EINE VORRICHTUNG ZUM ABSCHÄTZEN DER SEITLICHEN BESCHLEUNIGUNG EINES SCHIENENFAHRZEUGES
DISPOSITIF PERMETTANT D'ESTIMER L'ACCELERATION LATERALE D'UN VEHICULE FERROVIAIRE

(30) Priority: 27.01.1998 SE 9800217
(43) Date of publication of application: 08.11.2000
(73) Proprietor: Bombardier Transportation GmbH, 13627 Berlin (DE)
(72) Inventor: ÖHRN, Kenth, S-723 45 Västeras (SE)
(74) Representative: Berglund, Stefan
(86) International application number: PCT/SE1999/000111
(87) International publication number: WO 1999/037520

(56) References cited:
- EP-A1- 0 303 777
- EP-A1- 0 557 893
- EP-A2- 0 736 438
- WO-A-98/33691
- DE-C1- 19 703 322
- GB-A- 2 257 551
- US-A- 3 844 225
- PATENT ABSTRACTS OF JAPAN; & JP 2038974 A (TOYOTA MOTOR CORP) 08-02-90.

## Description

### TECHNICAL FIELD OF THE INVENTION AND PRIOR ART

The present invention relates to a device for the estimation of the lateral acceleration of a rail-mounted vehicle, wherein the device comprises a measuring device for measuring and outputting a measured signal in proportion to the value of the measured lateral acceleration, and a filter device arranged to filter out disturbances of said measured signal, so that its output signal is applicable to applications which are controlled by the lateral acceleration.

Such devices are previously known to be used in high-speed trains with lateral tilting of the car bodies, wherein the estimated value of the lateral acceleration determines the value of the tilting. A problem in this connection is to make a good estimation of the real lateral acceleration because the measured lateral acceleration is influenced by a plurality of disturbing sources. These disturbing sources may for example arise from irregularities in the rails, from the specific dynamic movements of the individual train and from forces of reaction during the tilting of the car body.

EP 303 777 shows a method of generating a control signal for the track-curve-dependent rotation of a coach body mounted on the bogie of a rail vehicle. The transverse acceleration is here measured and the measured signal is filtered in a low-pass filter.

In order to obtain a useable lateral acceleration signal a low-pass filter is used as filter device, which filter out the frequencies of the signal above a determined cut-off frequency. This low-pass filter has a cut-off frequency of 0,15-0,30 Hz. The disadvantage of such a heavy filtering is that it leads to a time delay of the signal.

For high-speed trains, this time delay of the lateral acceleration signal is not acceptable because the train in this case has advanced far into a curve before the tilting of the car bodies of train is initiated. In order to obtain a good comfort for the passengers in such a high-speed train this time delay must not be greater than 200-300 ms.

However, by locating the measurement equipment of the lateral acceleration in the front bogie, about 8 m ahead of the middle of the train body, an additional time may be obtained for filtering of the measured signal. This time is about 150 ms at a velocity of 200 km/h.

### SUMMARY OF THE INVENTION

The object of the present invention is to provide a device for the estimation of the lateral acceleration of a rail-mounted vehicle of the kind initially mentioned, which makes it possible to obtain a good estimation of the lateral acceleration at a short time delay.

This object is obtained according to the invention by a filter device comprising a first filter member, which is a model-based discrete-time filter arranged to calculate an output signal from the filter device by means of a preprogrammed disturbance model about said disturbances of the measured signal. Such a calculating filter member has a shorter time delay, which essentially depends on the character of the disturbances filtered out and on the working frequency of the filter. By means of such a calculating filter, it is possible to reduce essentially the time delay of the signal, because the delay of a calculating filter is essentially shorter than the corresponding delay of a corresponding conventional low-pass filter. Thereby, the total time delay of this filter member may be kept on a level, which clearly is below the above mentioned time delay of a conventional low-pass filter with a heavy filtering. In order to obtain a lateral acceleration signal, which is qualitatively approved, the calculating filter member may obtain information of the majority of the most frequent disturbances of the signal and thereby filter out these disturbances.

According to a preferred embodiment of the invention, the first filter member is arranged to calculate the output signal by means of information about the frequency characteristic of said disturbances. This is possible since the most individual disturbances appear at determined frequencies or at ranges of frequencies. It is, for example, known that a tilting device of the car body of the rail-mounted vehicle contributes itself to disturbances at a determined frequency, whereas irregularities in the rails contributes to disturbances within a range of frequencies. It is also advantageous, if the first filter member is arranged to calculate the output signal by means of information about the frequency characteristic of the real lateral acceleration, which arise during the run of the rail-mounted vehicles through a curve. The estimation of the lateral acceleration may clearly be improved if the frequency characteristic of this signal may be determined.

The above described filter member may be described as a model-based discrete-time filter member and may comprise a Wiener filter or a Kalman filter. Such filters are used in order to obtain an optimal solution for the estimation problem in linear systems. Wiener filters are in the practice used preferably in communication systems and in connection with digital image restorations, whereas the Kalman filters mostly are used in control systems. In this case, one may, by the knowledge about the frequency characteristic of known disturbances, calculate a Wiener filter, via a plurality of equations, whereafter the Wiener filter produces a filtered output signal. The Kalman filter has a different calculating process but gives during certain assumptions the same result as a Wiener filter.

According to a preferred embodiment of the invention, the filter device also comprises a second filter member, which comprises a low-pass filter arranged to filter out frequencies of the measured signal above a determined cut-off frequency. It is preferable, to combine a calculating filter member with a less heavy filtering low-pass filter. The cut-off frequency of such a low-pass filter may be increased in comparison with a conventional low-pass filter by a factor 10. Thereby, the low-pass filter will filter out a lesser part of the measured signal and the time delay of the signal through such a low-pass filter is therefore substantially reduced in relation to a conventional low-pass filter.

In order to obtain a suitable filtering of disturbances of high frequencies and at the same time obtain a substantially shorter time delay of the lateral acceleration signal through the low-pass filter, it may suitably have a cut-off frequency in the order of 1,5-2,0 Hz. Such a low-pass filter in series with a Wiener filter leads to a time delay of 250-350 ms, which is clearly below the corresponding time delay of a conventional low-pass filter.

According to another embodiment of the invention, said second filter member may comprise a plurality of calculating filters provided in parallel and arranged for filtering of different kinds of disturbances. Since it may be difficult to construct a disturbancy model, fitting to all types of environment, a plurality of variants may be worked out instead. A signal processing unit may be provided to evaluate the output signals of the filters provided in parallel, wherein the signal of the most suitable filter for the moment is used. The most suitable filter is the one, having the sharpest signal curve with the fewest disturbances.

According to another preferred embodiment of the invention, the device also may comprise a second measuring device for the measurement of the roll angle velocity and for outputting of a second measured signal in proportion to the value of the measured roll angle velocity and a second filter device arranged to filter out disturbances of said second measured signal. By measuring the roll angular velocity in the front bogie of the rail-mounted vehicle by means of, for example, a gyro, an early indication may be obtained as to when the train runs into a curve, and when it runs out of a curve, respectively. This measured signal of the roll angle velocity also comprises disturbances, wherein also in this case a filter device suitably is provided to filter said signal of the roll angular velocity. This second filter device may also comprise a second first filter member which is arranged to calculate a second output signal from the filter device by means of information about said disturbances of the second measured signal. Preferably, this filter member may also be a Wiener filter and the calculating of this second measured signal may be performed in a corresponding way as the lateral acceleration signal. In the practice, it may be suitable to combine such a calculating filter member with a low-pass filter, which is arranged to filter out frequencies of the second measured signal above a determined cut-off frequency. Such a low-pass filter, in combination with a calculating filter, may be designed to be essentially less filtering and have a considerably increased cut-off frequency in relation to a conventional low-pass filter, wherein the time delay through such a filter is very short. Finally, said output signal with regard to the measured lateral acceleration and roll angular velocity may be conducted to a signal processing unit, which is arranged to produce an output signal for the estimation of the lateral acceleration of the vehicle in view of these signals. Hereby, the roll angular velocity is utilised to sense quickly when the rail-mounted vehicle is running into a curve and when said curve is ended, respectively.

In a rail-mounted vehicle comprising at least a front and a rear bogie, said measuring devices with regard to the measuring of the lateral acceleration and roll angle velocity may, in order to reduce the time delay in an known way, be provided in the front bogie of the rail-mounted vehicle. By this positioning the measuring instrument is located about 8 m ahead of the middle of a normal railway vehicle, wherein the time for the vehicle to move these 8 m reduces the time delay of the signal arising in the filter device.

Preferably, said output signal, with regard to the lateral acceleration of the rail-mounted vehicle, is used to control the tilting of car bodies of the rail-mounted vehicles in the curves, which is usual for high-speed trains in order to soften the effects of the lateral acceleration on the passengers during the run in curves. However, said output signal also may be employed, for example, to a so-called "hold-off device", i.e. a device, which counteracts the lateral movement of a car body during the run in curves.

### BRIEF DESCRIPTION OF THE DRAWINGS

In the following, preferred embodiments of the invention are described by way of example with reference to the attached drawings, in which:
- Fig 1: shows a schematic description of a device according to the invention for the estimation of the lateral acceleration, according to a first embodiment.
- Fig 2: shows curves of the acceleration as a function of the time for an ideal lateral acceleration, for an estimated lateral acceleration, according to the invention, and for an estimated lateral acceleration, according to a conventional filter device having only a low-pass filter.
- Fig 3: shows an upper curve disclosing the measured lateral acceleration and lower curves disclosing the estimated lateral acceleration by a filter device according to the invention on the one hand and by a conventional filter device having only a low-pass filter on the other hand.
- Fig 4: shows corresponding curves as in Fig 3, but during a longer time period.
- Fig 5: shows an alternative embodiment of a device according to the invention.
- Fig 6: shows another alternative embodiment of a device according to the invention.

### DETAILED DESCRIPTION OF A PREFERRED EMBODIMENT OF THE INVENTION

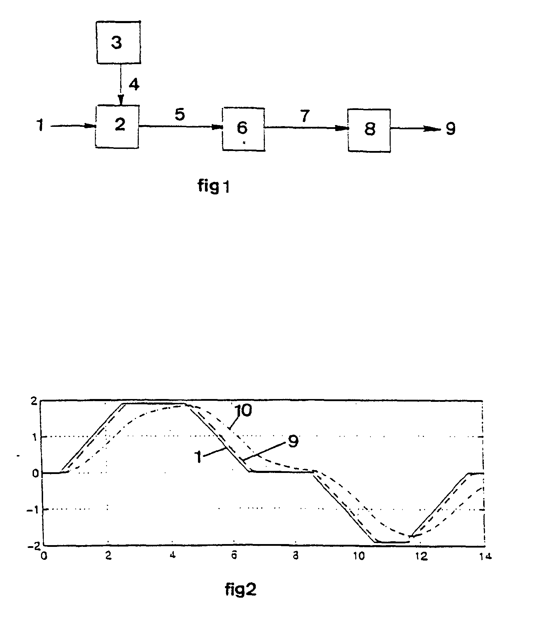

Fig 1 shows schematically how a device for the estimation of the lateral acceleration 1 may be performed. An accelerometer 2, which in the practice may be a pendulum or another conventional measuring instrument of acceleration, is actuated by the lateral acceleration 1. Furthermore, this accelerometer 2 is actuated by a lot of disturbing sources 3, which for example may be irregularities in the rails, the dynamic movements of the individual train and the tilting device of the car body. Said disturbances 4 of disturbing sources 3 are not an insignificant part of the measured lateral acceleration of the accelerometer 2. Consequently, the accelerometer 2 outputs a measured signal 5, consisting of the lateral acceleration 1 and disturbances 4. Usually, this measured signal 5 comprises such contributions from the disturbances 4 that it can not be used in an unfiltered manner to control, for example, the tilting of car bodies of a train. Therefore, the measured signal 5 is conducted to a low-pass filter 6, which filter out the frequencies above a determined cut-off frequency. According to the invention, it is suitable that said cut-off frequency is in the order of 1,5-2,0 Hz. Thereby, the low-pass filter may only filter out a smaller part of the total input signal and consequently, a relatively short time delay of the signal in the low-pass filter 6 is obtained. Simultaneously, many disturbances which appear include high frequencies and are in a frequency range above this cut-off frequency, wherein these disturbances consequently are filtered out also by the low-pass filter 6 according to the invention. The signal 7 filtered in the low-pass filter 6 is conducted thereafter to a so-called Wiener filter 8. The Wiener filter 8 is a model-based discrete-time filter and is usually realised by means of a computer. By inputting information about the frequencies of known disturbances 4, the Wiener filter 8 calculates an output signal value 9 of the lateral acceleration by means of this information and the signal 7 from the low-pass fitter. The quality of the output signal 9 is in this case depending on the fullness of detail of the disturbance model inputted into the Wiener filter 8. The delay of the time signal through a Wiener filter 8 is essentially shorter than through a conventional low-pass filter and the value of this delay is depending on the character of the disturbances which have been filtered out. A low-pass filter having a cut-off frequency of 1,5-2,0 Hz in series with a Wiener filter gives a time delay of about 250-350 ms, and thus an acceptable value of the time delay of the signal, which advantageously may be used to control the tilting of car bodies of a train.

Fig 2 shows in a somewhat simplified manner in a curve how an ideal lateral acceleration 1 of a running train acts. During the time interval 0-0,5 s the train runs straight ahead and thereby the lateral acceleration is 0. Thereafter, the train runs into a curve, wherein the ideal lateral acceleration 1 increases essentially along a straight line during the time interval 0,5-2,5 s. In the curve during the time interval 2,5-4,5 s, the train is subjected to a lateral acceleration 1, which is essentially constant. Thereafter, the curve is ended, wherein the lateral acceleration 1 decrease back along an essentially straight line to 0, during the time interval 4,5-6,5 s. In order to estimate the lateral acceleration 1 by using the device shown in Fig 1 an output signal 9 is obtained, the time varying value of which is shown in the diagram in Fig 2. As shown, the curve of said output signal 9 follows the curve for the ideal lateral acceleration 1 very well with only a smaller time delay. In the diagram, it is also shown a corresponding estimation of the lateral acceleration 1 for a conventional device, having a heavily filtering low-pass filter. This curve is denoted 10, in Fig 2, and has a relatively long time delay in relation to the ideal curve 1 of the lateral acceleration.

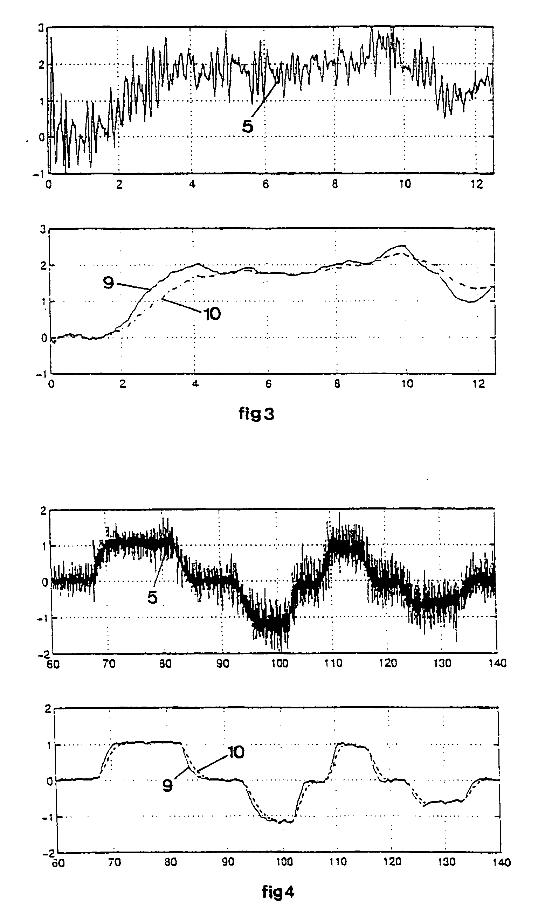

Fig 3 and 4 show curves of lateral acceleration during a shorter and a longer time period, respectively. The upper diagrams show how the measured signal 5 of the lateral acceleration may vary during the time and the lower diagrams show by a solid line the calculated output signal value 9 of the lateral acceleration according to the estimation device of the invention, whereas the dashed line 10 shows the estimated lateral acceleration according to a conventional device having only a low-pass filter. In the figures, it is seen that the measured signal 5 due to the disturbances is very fluctuating and therefore it has to be filtered in order to provide a useful output signal. From the figures, it is also evident that the signal 9 adapts faster than the signal 10 to the value of the measured signal 5, at for example the entrance and exit of curves.

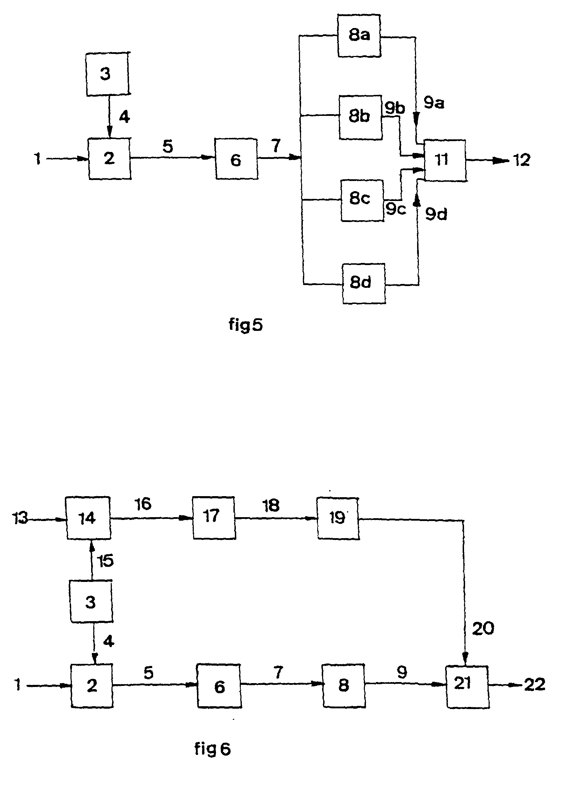

Fig 5 shows an alternative embodiment of the invention which differs from the embodiment shown in Fig 1 in that the device in this case has a plurality of Wiener filters 8a-d provided in parallel, which are arranged for different types of disturbances in different environments. In order to obtain an acceptable filtered signal with regard to the lateral acceleration a well working detailed disturbing model has to be provided in the Wiener filter 8. During certain circumstances, it may be difficult to obtain such a well working disturbing model, which works during all circumstances. Therefore, the signal 7 is filtered in parallel in the respective Wiener filter 8a-8d, according to this embodiment, whereafter each of these filters transmit an output signal 9a-9d to a signal processing unit 11. Thereafter, this signal processing unit 11 evaluates each of the signals 9a-9d and use the signal, which is less disturbed for the moment, as output signal 12.

Fig 6 shows another embodiment of the invention, where also the roll angular velocity 13 is estimated. By roll angular velocity 13 is meant the angular velocity of an oscillating part of the rail-mounted vehicle in curves, preferably its front bogie. This may be measured by means of a gyro 14, which preferably is positioned together with the accelerometer 2 in the front bogie of the rail-mounted vehicle. Also during the measuring of the roll angular velocity 13, disturbances 15 appears from disturbing sources 3. Therefore, the measured roll angular velocity 16 has to be filtered in order to form a useful signal. In a corresponding way as by the estimation of the lateral acceleration, this second measured signal 16 is filtered through a low-pass filter 17, whereafter this partly filtered signal 18 is connected to a Wiener filter 19. This Wiener filter 19 comprises a preprogrammed disturbing model of the roll angular velocity, wherein said Wiener filter 19 calculates a second output signal 20. A signal processing unit 21 is provided for receiving said second output signal 20 related to the roll angular velocity simultaneously with an output signal 9 related to the lateral acceleration of the vehicles from the first filter device. By measuring the roll angular velocity, it may in a faster and more effective way be determined when the rail vehicle runs into a curve and out of a curve, respectively. Thereby, the signal processing unit 21 in some cases may determine a better estimated output signal 22 related to the lateral acceleration than the signal 9.

Preferably, the invention is applicable to rail-mounted vehicles, having a front and a rear bogie and a car body, which is tiltable in relation to these bogies.

The invention is not in any way restricted to the embodiment described above and in the figures but may be varied freely within the scope of the claims. For example, other types of calculating filters may be used, such as Kalman filter. A Kalman filter is also a model-based discrete-time filter, which is realised by means of a computer for calculating an output signal from input measuring and disturbance signals.

## Claims

1. A device for the estimation of the lateral acceleration of a rail-mounted vehicle, wherein the device comprises a measuring device (2) for measuring and outputting of a measured signal (5) in proportion to the value of the measured lateral acceleration, and a filter device arranged to filter out disturbances (4) of said measured signal (5), so that its output signal (9, 12, 22) is applicable to applications which are controlled by the lateral acceleration, **characterised in that** the filter device comprises a first filter member (8), which is a model-based discrete-time filter arranged to calculate an output signal (9, 12, 22) from the filter device by means of a preprogrammed disturbance model of said disturbances (4) of the measured signal (5).

2. A device according to claim 1, **characterised in that** said first filter member (8) is arranged to calculate the output signal (9, 12, 22) by means of information about the frequency characteristic of said disturbances.

3. A device according to claim 1 or 2, **characterised in that** said first filter member (8) is arranged to calculate the output signal (9, 12, 22) by means of information about the frequency characteristic of the real lateral acceleration.

4. A device according to claim 2 or 3, **characterised in that** said first filter member comprises a Wiener filter (8).

5. A device according to claim 2 or 3, **characterised in that** said first filter member comprises a Kalman filter.

6. A device according to any one of the preceding claims, **characterised in that** the filter device also comprises a second filter member (6), which comprises a low-pass filter arranged to filter out frequencies of the measured signal (5) above a determined cut-off frequency.

7. A device according to claim 6, **characterised in that** the second filter member (6) has a cut-off frequency in the order of 1,5-2,0 Hz.

8. A device according to any one of the preceding claims, **characterised in that** the first filter member (8) comprises a plurality of filters (8a-8d) provided in parallel and arranged for filtering of different kinds of disturbances.

9. A device according to claim 8, **characterised in that** a signal processing unit (11 ) is provided to evaluate the output signals (9a-9d) of the filters (8a-8d) provided in parallel, wherein the filter (8a-8d) which is most suitable for the moment is used.

10. A device according to any one of the preceding claims, **characterised in that** it comprises a second measuring device (14) for measuring the roll angular velocity and for outputting a second measured signal (16) in proportion to the value of the measured roll angular velocity (13), and a second filter device arranged to filter out disturbances (15) of said second measured signal (16).

11. A device according to claim 10, **characterised in that** the second filter device comprises a second first filter member (19), which is arranged to calculate a second output signal from the filter device by means of information about said disturbances of the second measured signal (16).

12. A device according to claim 11, **characterised in that** the second filter device also comprises a second filter member (17), which comprises a low-pass filter arranged to filter out frequencies of the second measured signal (16) above a determined cut-off frequency.

13. A device according to any one of claims 11 and 12, **characterised in that** said second output signals, with regard to the measured lateral acceleration (9) and roll angular velocity (20), are conducted to a signal processing unit (21) which, in view of these signals, is arranged to produce an output signal (22) for the estimation of the lateral acceleration of the vehicle.

14. A railway mounted vehicle comprising a device according to any one of the preceding claims, wherein the rail-mounted vehicle comprises at least a front and a rear bogie, **characterised in that** said measuring devices (2, 14), with regard to the measuring of the lateral acceleration (1) and roll angular velocity (13), are provided in the front bogie of the rail-mounted vehicle.

15. Use of a device according to any one of the preceding claims to control the tilting of the car body of the rail-mounted vehicle in curves.

## Patentansprüche

1. Vorrichtung zum Abschätzen der seitlichen Beschleunigung eines Schienenfahrzeugs, wobei die Vorrichtung eine Messvorrichtung (2) zum Messen und Ausgeben eines Messsignals (5), das proportional zu dem Wert der gemessenen seitlichen Beschleunigung ist, und eine Filtervorrichtung umfasst, die zum Herausfiltern von Störungen (4) des Messsignals (5) ausgebildet ist, sodass ihr Ausgangssignal (9, 12, 22) für Anwendungen verwendbar ist, die durch die seitliche Beschleunigung gesteuert sind, **dadurch gekennzeichnet, dass** die Filtervorrichtung ein erstes Filterglied (8) umfasst, das ein modellbasierter zeitdiskreter Filter ist, der zum Berechnen eines Ausgangssignals (9, 12, 22) der Filtervorrichtung mit Hilfe eines programmierten Störungsmodells der Störungen (4) des Messsignals (5) ausgebildet ist.

2. Vorrichtung nach Anspruch 1, **dadurch gekennzeichnet, dass** das erste Filterglied (8) zum Berechnen des Ausgangssignals (9, 12, 22) mit Hilfe von Information über die Frequenzcharakteristik der Störungen ausgebildet ist.

3. Vorrichtung nach einem der Ansprüche 1 oder 2, **dadurch gekennzeichnet, dass** das erste Filterglied (8) zum Berechnen des Ausgangssignals (9, 12, 22) mit Hilfe von Information über die Frequenzcharakteristik der realen seitlichen Beschleunigung ausgebildet ist.

4. Vorrichtung nach einem der Ansprüche 2 oder 3, **dadurch gekennzeichnet, dass** das erste Filterglied einen Wiener-Filter (8) umfasst.

5. Vorrichtung nach einem der Ansprüche 2 oder 3, **dadurch gekennzeichnet, dass** das erste Filterglied einen Kalman-Filter umfasst.

6. Vorrichtung nach einem der vorhergehenden Ansprüche, **dadurch gekennzeichnet, dass** die Filtervorrichtung weiterhin ein zweites Filterglied (6) umfasst, das einen Tiefpassfilter umfasst, der zum Herausfiltern von Frequenzen des Messsignals (5) oberhalb einer vorgegebenen Grenzfrequenz angeordnet ist.

7. Vorrichtung nach Anspruch 6, **dadurch gekennzeichnet, dass** das zweite Filterglied (6) eine Grenzfrequenz im Bereich von 1,5 bis 2,0 Hz aufweist.

8. Vorrichtung nach einem der vorhergehenden Ansprüche, **dadurch gekennzeichnet, dass** das erste Filterelement (8) mehrere Filter (8a bis 8d) umfasst, die parallel zueinander angeordnet und zum Filtern verschiedener Arten von Störungen ausgebildet sind.

9. Vorrichtung nach Anspruch 8, **dadurch gekennzeichnet, dass** eine Signalverarbeitungseinheit (11) zum Auswerten der Ausgangssignale (9a bis 9d) der parallel zueinander angeordneten Filter (8a bis 8d), vorgesehen ist, wobei derjenige Filter (8a bis 8d) benutzt wird, der momentan am besten geeignet ist.

10. Vorrichtung nach einem der vorhergehenden Ansprüche, **dadurch gekennzeichnet, dass** sie eine zweite Messvorrichtung (14) zum Messen der Rollwinkelgeschwindigkeit und zum Ausgeben eines zweiten Messsignals (16), das proportional zu dem Wert der gemessenen Rollwinkelgeschwindigkeit (13) ist, und eine zweite Filtervorrichtung umfasst, die zum Herausfiltern von Störungen (15) des zweiten Messsignals (16) ausgebildet ist.

11. Vorrichtung nach Anspruch 10, **dadurch gekennzeichnet, dass** die zweite Filtervorrichtung ein zweites Filterglied (19) umfasst, das zum Berechnen eines zweiten Ausgangssignals der Filtervorrichtung mit Hilfe von Information über die Störungen des zweiten Messsignals (16) ausgebildet ist.

12. Vorrichtung nach Anspruch 11, **dadurch gekennzeichnet, dass** die zweite Filtervorrichtung weiterhin ein zweites Filterglied (17) umfasst, das einen Tiefpassfilter zum Herausfiltern von Frequenzen des zweiten Messsignals (16) oberhalb einer bestimmten Grenzfrequenz umfasst.

13. Vorrichtung nach einem der vorhergehenden Ansprüche 11 oder 12, **dadurch gekennzeichnet, dass** die zweiten Ausgangssignale bezüglich der gemessenen seitlichen Beschleunigung (9) und Rollwinkelgeschwindigkeit (20) an eine Signalverarbeitungseinheit (21) geleitet werden, die vor dem Hintergrund dieser Signale zum Erzeugen eines Ausgangssignals (22) zur Abschätzung der seitlichen Beschleunigung des Fahrzeugs ausgebildet ist.

14. Schienenfahrzeug, umfassend eine Vorrichtung nach einem der vorhergehenden Ansprüche, wobei das Schienenfahrzeug zumindest ein vorderes und ein hinteres Drehgestell umfasst, **dadurch gekennzeichnet, dass** die Messvorrichtungen (2, 14) zur Messung der seitlichen Beschleunigung (1) und der Rollwinkelgeschwindigkeit (13) im vorderen Drehgestell des Schienenfahrzeugs vorgesehen sind.

15. Gebrauch einer Vorrichtung nach einem der vorhergehenden Ansprüche zum Steuern der Neigung der Karosserie des Schienenfahrzeugs in Kurven.

## Revendications

1. Dispositif d'estimation de l'accélération latérale d'un véhicule ferroviaire, dans lequel le dispositif comprend un dispositif (2) de mesure et de sortie d'un signal (5) mesuré proportionnel à la valeur de l'accélération latérale mesurée, et un dispositif de filtrage destiné à filtrer des parasites (4) du signal (5) mesuré, de sorte que son signal (9, 12, 22) de sortie puisse être appliqué à des applications qui sont commandées par l'accélération latérale, **caractérisé en ce que** le dispositif de filtrage comprend un premier élément (8) de filtre, qui est un filtre, à valeur discrète dans le temps et fondé sur un modèle, destiné à calculer un signal (9, 12, 22) de sortie du dispositif de filtrage au moyen d'un modèle préprogrammé des parasites (4) du signal (5) mesuré.

2. Dispositif d'estimation suivant la revendication 1, **caractérisé en ce que** le premier élément (8) de filtre est agencé pour calculer le signal (9, 12, 22) de sortie au moyen d'informations sur la caractéristique de fréquence des parasites.

3. Dispositif d'estimation suivant la revendication 1 ou 2, **caractérisé en ce que** le premier élément (8) de filtre est agencé pour calculer le signal (9, 12, 22) de sortie au moyen d'informations sur la caractéristique de fréquence de l'accélération latérale réelle.

4. Dispositif d'estimation suivant la revendication 2 ou 3, **caractérisé en ce que** le premier élément de filtre comprend un filtre (8) de Wiener.

5. Dispositif d'estimation suivant la revendication 2 ou 3, **caractérisé en ce que** le premier élément de filtre comprend un filtre de Kalman.

6. Dispositif d'estimation suivant l'une ou quelconque des revendications précédentes, **caractérisé en ce que** le dispositif de filtrage comprend aussi un deuxième élément (6) de filtre, qui comprend un filtre pass-bas agencé pour éliminer des fréquences du signal (5) mesuré supérieures à une fréquence de coupure déterminée.

7. Dispositif d'estimation suivant la revendication 6, **caractérisé en ce que** le deuxième élément (6) de filtre a une fréquence de coupure de l'ordre de 1,5 à 2,0 Hz.

8. Dispositif d'estimation suivant l'une quelconque des revendications précédentes, **caractérisé en ce que** le premier élément (8) de filtre comprend une pluralité de filtres (8a-8d) montés en parallèles et agencés pour filtrer des types différents de parasites.

9. Dispositif d'estimation suivant la revendication 8, **caractérisé en ce qu'**il est prévu une unité (11) de traitement du signal pour évaluer les signaux (9a-9d) de sortie des filtres (8a-8d) montés en parallèle, le filtre (8a-8d) qui est le plus approprié dans l'instant étant utilisé.

10. Dispositif d'estimation suivant l'une des revendications précédentes, **caractérisé en ce qu'**il comprend un deuxième dispositif (14) de mesure de la vitesse angulaire de roulis et de sortie d'un deuxième signal (16) mesuré proportionnel à la valeur de la vitesse (13) angulaire de roulis qui est mesurée et un deuxième dispositif de filtrage agencé pour filtrer des parasites (15) du deuxième signal (16) mesuré.

11. Dispositif d'estimation suivant la revendication 10, **caractérisé en ce que** le deuxième dispositif de filtrage comprend un deuxième premier élément (19) de filtre, qui est agencé pour calculer un deuxième signal de sortie du dispositif de filtrage au moyen d'informations sur les parasites du deuxième signal (16) mesuré.

12. Dispositif d'estimation suivant la revendication 11, **caractérisé en ce que** le deuxième dispositif de filtrage comprend aussi un deuxième élément (7) de filtre, qui comprend un filtre pass-bas agencé pour éliminer par filtrage les fréquences du deuxième signal (16) mesuré au-dessus d'une fréquence de coupure déterminée.

13. Dispositif d'estimation suivant la revendication 11 ou 12, **caractérisé en ce que** les deuxième signaux de sortie, pour ce qui concerne l'accélération (9) latérale mesurée et la vitesse (20) angulaire de roulis, sont envoyés à une unité (21) de traitement du signal, qui, au vu de ces signaux, est agencée pour produire un signal (22) de sortie d'estimation de l'accélération latérale du véhicule.

14. Véhicule ferroviaire comprenant un dispositif d'estimation suivant l'une quelconque des revendications précédentes, dans lequel le véhicule ferroviaire comprend au moins un boggie avant et un boggie arrière, **caractérisé en ce que** les dispositifs (2, 14) de mesure en ce qui concerne la mesure de l'accélération (1) latérale et de la vitesse (13) angulaire de roulis, sont prévus dans le boggie avant du véhicule ferroviaire.

15. Utilisation d'un dispositif suivant l'une quelconque des revendications précédentes, pour régler le basculement de la caisse de voiture du véhicule ferroviaire dans les courbes.
